# FASCICULE DE BREVET EUROPEEN

(11) **EP 0 375 568 B1**
(45) Date de publication et mention de la délivrance du brevet: **11.01.1995**
(21) Numéro de dépôt: 89420457.7
(22) Date de dépôt: 22.11.1989
(51) Int. Cl.: H01H 71/02, H02B 1/26

(54) **Dispositif d'assemblage modulaire d'un disjoncteur différentiel multipolaire**
Modulare Zusammenbauvorrichtung für einen mehrpoligen Differentialschutzschalter
Modulator assembly device for a multipole differential circuit breaker

(30) Priorité: 14.12.1988 FR 8816592
(43) Date de publication de la demande: 27.06.1990
(73) Titulaire: MERLIN GERIN, F-38240 Meylan (FR)
(72) Inventeur: Guillon, Patrick, F-38050 Grenoble Cédex (FR); Vallot, Jacques, F-38050 Grenoble Cédex (FR); Couteron, Patrick, F-38050 Grenoble Cédex (FR); Bonniau, Michel, F-38050 Grenoble Cédex (FR)
(74) Mandataire: Hecké, Gérard

(56) Documents cités:
- EP-A- 0 002 449
- EP-A- 0 138 634
- DE-A- 2 554 177
- DE-U- 8 807 464
- FR-A- 2 410 892
- FR-A- 2 437 692
- FR-A- 2 499 308
- FR-A- 2 512 582
- FR-A- 2 588 438
- GB-A- 2 009 832

## Description

L'invention est relative à un disjoncteur différentiel multipolaire formé par l'assemblage modulaire côte à côte d'un bloc déclencheur différentiel à un bloc disjoncteur, lequel comporte une paire de première et deuxième bornes de raccordement par pôle, disposées sur les faces latérales étroites opposées, et une première grande face latérale d'accolement dotée d'une lumière d'accès à une barre de déclenchement d'un premier mécanisme de commutation à manette, ledit bloc déclencheur comprenant:
- un transformateur totalisateur à enroulement secondaire alimentant un relais de déclenchement,
- un deuxième mécanisme de commande piloté par le relais et une manette, et ayant un doigt de déclenchement faisant saillie d'un orifice ménagé dans une deuxième grande face latérale conjuguée d'un boîtier moulé,
- des moyens de fixation pour assurer l'assemblage des deux blocs après établissement automatique d'une première liaison mécanique de déclenchement résultant de l'insertion du doigt dans la lumière au cours de la phase d'accolement des premières et deuxièmes grandes faces latérales,
- et des conducteurs de liaison reliant le circuit primaire du transformateur aux deuxièmes bornes du bloc disjoncteur.

Un tel disjoncteur à bloc différentiel adaptable ressort du brevet français FR-A-2437692. Les conducteurs de liaison qui relient les enroulements primaires du transformateur totalisateur au circuit électrique du bloc disjoncteur, traversent le boîtier isolant du bloc déclencheur différentiel par une ouverture ménagée dans sa face latérale étroite. Les extrémités des conducteurs de liaison sont ensuite engagées par l'extérieur dans les bornes de raccordement aval du bloc disjoncteur. L'accolement des premières et deuxièmes grandes faces latérales des blocs pour l'établissement des liaisons mécaniques de déclenchement et de réarmement, s'effectue avec facilité, étant donné que l'interface entre les deux blocs ne contient pas les conducteurs de liaison. L'assemblage mécanique définitif intervient ensuite par des moyens divers de fixation tels que décrits dans les brevets français FR-A-2512582, 2411329 et 2420049.

Il est également connu du brevet français FR-A-2588438 d'utiliser une double charnière pour effectuer un accouplement initial des deux blocs l'un par rapport à l'autre, puis à les accoler par pivotement de l'un d'eux, et d'opérer ensuite un verrouillage final des blocs accolés. On remarque néanmoins que le pivotement s'effectue au voisinage des socles selon un axe fictif horizontal parallèle au fond des modules. Le verrouillage final intervient soit par simple encliquetage d'un nez fixe ou languette souple sur une partie conjuguée de l'autre bloc dans le cas d'un bloc auxiliaire "léger", soit au moyen de vis insérables dans les rivets creux du bloc disjoncteur, dans le cas d'un bloc auxiliaire "lourd", notamment un bloc déclencheur différentiel.

Dans le brevet français FR-A-2125425, les conducteurs de liaison traversent des passages prévus dans le bloc disjoncteur, et sont raccordés aux bornes par l'intérieur.

L'objet de l'invention consiste à faciliter l'adaptation d'un bloc déclencheur différentiel à sorties latérales des conducteurs de liaison, et à raccordement électrique extérieur au bloc disjoncteur.

Le disjoncteur selon l'invention est caractérisé en ce que la deuxième grande face latérale du bloc déclencheur différentiel, présente une ouverture pour la traversée des conducteurs de liaison vers l'interface entre les deux blocs, et que les moyens de fixation comportent un accrochage articulé, et un cavalier de verrouillage, disposés respectivement du côté des premières et deuxièmes bornes opposées, ledit cavalier étant manoeuvrable vers une position active pour assurer le plaçage des conducteurs de liaison contre la deuxième grande face latérale lors du rapprochement progressif des deux blocs.

Selon des revendications concernant des modes particuliers la deuxième grande face latérale du boîtier est équipée de rainures parallèles, dans lesquelles s'encastrent les conducteurs de liaison en position active du cavalier de verrouillage. Il en résulte un assemblage sans jeu transversal des deux blocs, malgré la présence dans l'interface des conducteurs de liaison traversant l'ouverture de la deuxième grande face latérale du bloc déclencheur. Les extrémités libres des conducteurs de liaison sont ensuite engagées par l'extérieur dans les deuxièmes bornes du bloc disjoncteur.

L'accrochage articulé comporte un ergot solidaire du boîtier et destiné à s'emboîter dans un évidement conjugué du bloc disjoncteur, de manière à autoriser au début de la phase d'assemblage un pivotement relatif des deux blocs autour d'un axe fictif vertical s'étendant dans la direction de la profondeur. Un seul ergot est suffisant pour réaliser l'accrochage articulé, lequel se trouve à l'opposé des deuxièmes bornes de connexion des extrémités des conducteurs de liaison pour faciliter le raccordement électrique du bloc déclencheur au bloc disjoncteur.

Le cavalier de verrouillage est monté à pivotement autour d'un axe dans un logement du boîtier du bloc déclencheur, et comporte un bras de retenue susceptible de s'engager dans un évidement de fixation du bloc disjoncteur, ledit bras ayant une rampe agencée pour assurer un effet de came sur un redan de l'évidement lorsque le cavalier est manoeuvré de la position inactive vers la position active.

Le cavalier de verrouillage est équipé d'un levier de commande disposé à l'opposé de l'axe d'articulation, et sensiblement en équerre par rapport au bras de retenue.

Un capot d'inviolabilité est rapporté sur les deuxièmes bornes et le cavalier pour empêcher toute déconnexion électrique et démontage mécanique du bloc déclencheur différentiel.

D'autres avantages et caractéristiques ressortiront plus clairement de la description qui va suivre d'un mode de réalisation de l'invention, donné à titre d'exemple non limitatif et représenté aux dessins annexés, dans lesquels:
- la figure 1 est une vue schématique en élévation d'un disjoncteur différentiel bipolaire en position assemblée du bloc disjoncteur et du bloc déclencheur différentiel;
- la figure 2 est une vue en perspective du disjoncteur de la figure 1, en position séparée des deux blocs;
- la figure 3 montre une vue éclatée en perspective du bloc de déclenchement différentiel de la figure 2;
- les figures 4 et 5 représentent des vues partielles en coupe selon la ligne V-V de la figure 2, montrant respectivement le cavalier de verrouillage en cours d'insertion, et en fin d'insertion.
- la figure 6 est une vue en coupe selon la ligne VI-VI de la figure 2, montrant les deux blocs accolés et le cavalier en position inactive;
- les figures 7 et 8 sont des vues identiques à la figure 6, en positions intermédiaire et active du cavalier;
- la figure 9 est une vue en perspective d'un bloc déclencheur différentiel tétrapolaire, équipé d'un isolateur de protection des conducteurs de liaison.

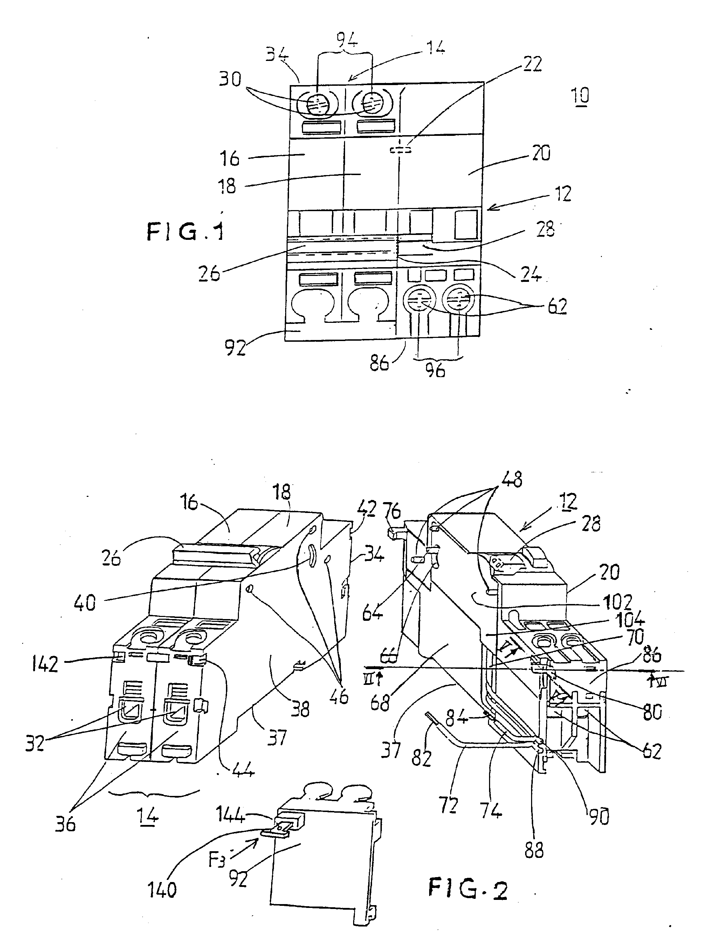

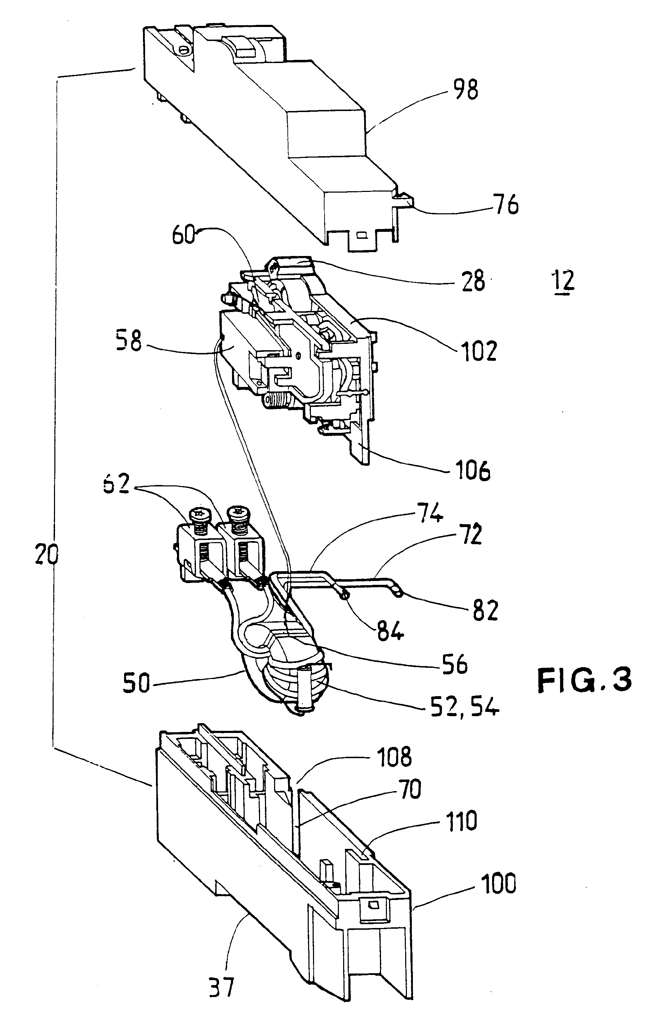

Sur les figures 1 à 3, un disjoncteur différentiel 10 bipolaire est formé par l'assemblage modulaire côte à côte d'un bloc déclencheur différentiel 12 à un bloc disjoncteur 14. Les deux blocs 12,14 à boîtiers 16,18,20 isolants moulés de forme parallélépipèdiques, sont reliés entre eux par une première liaison mécanique 22 de déclenchement, et une deuxième liaison mécanique 24 de réarmement par les manettes 26,28. Chaque pôle du bloc disjoncteur 14 comporte une paire de première et deuxième bornes 30,32 à cages de raccordement et vis de serrage, situées au niveau des faces latérales étroites opposées 34,36 du boîtier 16,18 respectif. Le socle 37 de chaque boîtier 16,18,20 est doté d'un profil d'encliquetage pour le montage sur un rail support.

La première grande face latérale d'accolement du boîtier 18 comporte une lumière 40 curviligne autorisant l'accès à la barre de déclenchement automatique du mécanisme de commutation du bloc disjoncteur 14. Deux évidements 42,44 de fixation sont agencés au niveau de chaque arête verticale délimitant la grande face 38 des deux autres faces latérales étroites 34,36. La première grande face 38 du bloc disjoncteur 14 comporte d'autre part des orifices 46 circulaires pour l'introduction de picots 48 conjugués de centrage et de détrompage appartenant au bloc déclencheur différentiel 12.

Le bloc déclencheur 12 renferme un transformateur totalisateur 50 ayant deux enroulements primaires 52,54 et un enroulement secondaire 56 bobinés sur un noyau torique. L'enroulement secondaire 56 est connecté électriquement à un relais de déclenchement 58 coopérant avec le mécanisme de commande 60 associé à la manette 28. Les enroulements primaires sont reliés à une paire de bornes 62 de raccordement, logées dans le boîtier 20, du même côté que les deuxièmes bornes 32 du bloc disjoncteur 14.

Le mécanisme de commande 60 du type décrit dans la demande de brevet français 8802907, est équipé d'un doigt 64 de déclenchement faisant saillie d'un orifice 66 ménagé dans la deuxième grande face latérale 68 du bloc 12. La deuxième grande face 68 vient en engagement contre la première face 38 conjuguée d'accolement du bloc disjoncteur 14, et comporte en plus des picots 48, une lumière ou ouverture 70 pour la traversée des conducteurs de liaison 72,74 des enroulements primaires 52,54 avec le bloc disjoncteur 14. Les conducteurs 72,74 sont formés par des fils rigides en cuivre.

L'un des bords de la deuxième grande face latérale 68 comprend un ergot 76 d'accrochage venant de moulage avec le boîtier 20, et destiné à s'emboîter dans l'évidement 42 conjugué lors de l'assemblage modulaire des deux blocs 12,14. Au niveau du bord opposé de la deuxième grande face 68, le boîtier 20 comporte un logement 78 de réception d'un cavalier 80 de verrouillage.

Les deux conducteurs de liaison 72,74 sont conformés en demi-boucles en U dont les extrémités libres 82,84 sont insérées par l'extérieur dans les cages respectives des bornes 32 du bloc disjoncteur 14. Entre la lumière 70 verticale et la face latérale étroite 86 s'étendent perpendiculairement deux rainures 88,90 parallèles, pratiquées dans la deuxième grande face 68 du boîtier 20. A l'opposé des extrémités 82,84, les branches de sortie des conducteurs 72,74 s'encastrent dans les rainures 88,90 respectives, de manière à éviter tout jeu transversal entre les deux blocs 12,14 assemblés.

Un capot 92 d'obturation associé à un fil de plombage est rapporté après assemblage des blocs 12,14 sur les bornes 32 du bloc disjoncteur 14 pour assurer l'inviolabilité de l'appareil. Le raccordement électrique du disjoncteur différentiel 10 s'effectue par les bornes 30 et 62 reliées aux conducteurs actifs d'arrivée 94 et de départ 96.

Le boîtier 20 du bloc déclencheur différentiel 12 est constitué par l'encliquetage de deux demi-coquilles 98,100 dans le sens de la profondeur, c'est à dire perpendiculairement à la direction transversale d'accolement des deux blocs 12,14. La demi-coquille 100 inférieure renferme le transformateur totalisateur 50, les bornes 62 et les conducteurs de liaison 72,74. Dans la demi-coquille supérieure 98 se trouvent le mécanisme 60 de commande et le relais 58. L'une 102 des parois latérales de la demi-coquille 98 isolante constitue en même temps un flasque intérieur de montage du mécanisme 60. Ce flasque comporte des languettes 104,106 de positionnement susceptibles de s'engager dans des saignées 108,110 de guidage vertical, pratiquées dans la demi-coquille 100 inférieure.

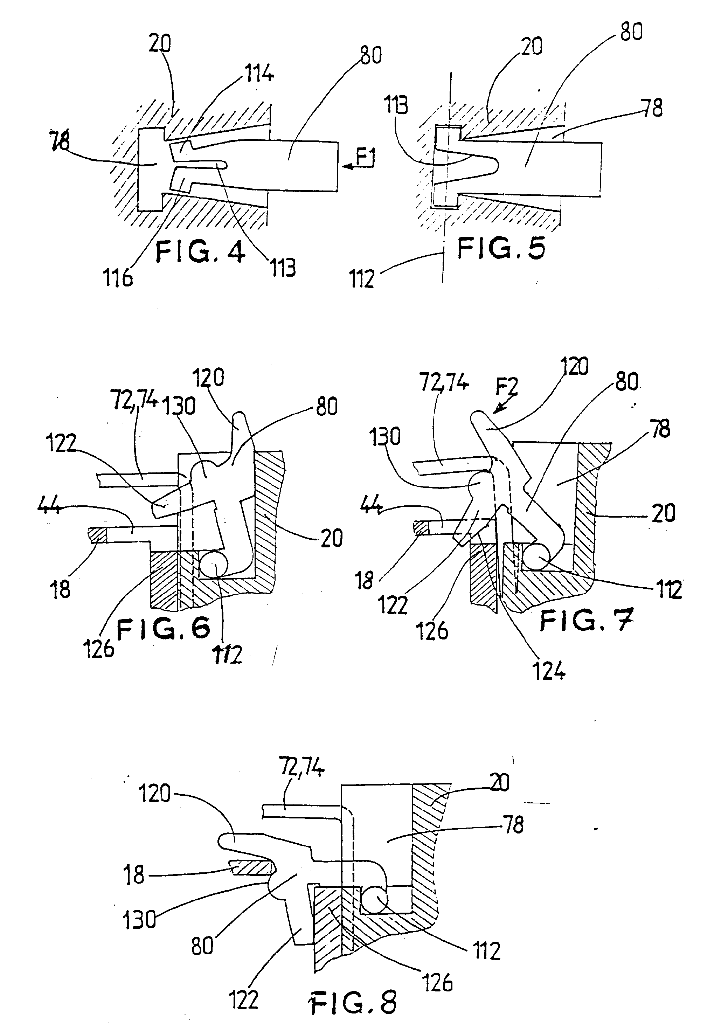

Sur les figures 4 et 5, la mise en place du cavalier 80 de verrouillage dans le logement 78 du boîtier 20 s'opère par une action de poussée dans le sens de la flèche F1. La base du cavalier 80 comporte un axe 112 d'articulation constitué par deux embouts 114,116 cylindriques agencés aux extrémités de deux branches élastiques séparées l'une de l'autre par une fente 113 médiane. L'entrée du logement 78 présente une forme légèrement tronconique de manière à comprimer les deux branches lors de l'emmanchement du cavalier 80 (figure 4). En fin de course d'insertion (figure 5) se produit l'expansion des deux embouts 114,116 dans un palier cylindrique prévu dans le fond du logement 78. L'axe 112 se trouve alors verrouillé par encliquetage dans le logement 78, et le cavalier 80 peut être actionné à pivotement autour de l'axe 112 entre une position inactive et une position active.

En référence aux figures 6 à 8, est représentée l'opération de verrouillage mécanique par le cavalier 80 après accolement des deux blocs 12,14. Le cavalier 80 comporte un levier de commande 120 à l'opposé de l'axe d'articulation 112, et un bras de retenue 122 disposé sensiblement en équerre par rapport au levier 120. Le bras de retenue 122 est doté d'une rampe 124 en forme de came destinée à coopérer avec un redan 126 du boîtier 18 à l'intérieur de l'évidement 44.

La figure 6 montre le cavalier 80 en position inactive après insertion de l'axe 112 dans le logement 78 du boîtier 20. Une action manuelle de serrage latéral des deux blocs 12,14 maintient la grande face 68 du boîtier 20 contre la face conjuguée 38 d'accolement du boîtier 18.

La figure 7 représente le début de l'opération de verrouillage des deux blocs 12,14 au cours de laquelle le cavalier 80 est entraîné en rotation dans le sens inverse des aiguilles d'une montre, au moyen du levier de commande 120 manoeuvré de l'extérieur dans le sens de la flèche F2. On remarque que dans une position intermédiaire, la réaction de la rampe 124 du bras de retenue 122 sur le redan 126 provoque un effet de came autorisant un rapprochement progressif des deux blocs 12,14.

L'action manuelle de serrage latéral peut être interrompue, suivi de la rotation du cavalier 80 vers la position active (figure 8) dans laquelle le bras de retenue 122 assure un verrouillage positif des deux blocs 12,14. Un bossage 130, prévu sur le bras de retenue 122 à l'opposé de la rampe 124, coopère avec le boîtier 18 dans la position active pour former un point dur s'opposant à la manoeuvre inverse du cavalier 80 vers la position inactive.

L'opération de verrouillage mécanique par le cavalier 80 intervient en fin d'assemblage. Les phases précédentes d'accouplement des deux blocs 12,14 ressortent de la figure 2.

L'introduction de l'ergot 76 d'accrochage dans l'évidement 42 conjugué forme un accrochage ou accouplement articulé permettant un pivotement relatif des deux blocs 12,14. Au cours de cette première phase de pivotement, les picots 48 s'engagent dans les orifices 46, et le doigt 64 de déclenchement du mécanisme de commande 60 du bloc déclencheur différentiel 12 pénètre dans la lumière 40 de la face 38 pour former la première liaison mécanique 22 de déclenchement. Les deux extrémités 82,84 des conducteurs de liaison 72,74 sont positionnées depuis l'extérieur dans les cages respectives des bornes 32. On remarque que l'accouplement à articulation de l'ergot 76 dans l'évidement 42 est disposé à l'opposé des bornes 32.

Dans la deuxième phase intervient l'action manuelle de serrage latéral des deux blocs, suivi du verrouillage mécanique par le cavalier 80, tel que décrit précédemment en référence aux figures 6 à 8. Le rapprochement des deux blocs 12,14 par la rotation du cavalier 80 de la position intermédiaire (figure 7) vers la position active (figure 8) provoque l'encastrement des branches de sortie des conducteurs de liaison 72,74 dans les rainures 88,90 respectives de la grande face 68 du bloc déclencheur 12. La profondeur des rainures 88,90 correspond sensiblement au diamètre des conducteurs de liaison 72,74, de manière à autoriser un accolement parfait entre les deux faces 38,68, lorsque le cavalier 80 se trouve en position active (figure 8).

L'assemblage mécanique étant terminé, il suffit ensuite de raccorder électriquement le bloc déclencheur 12 au circuit électrique du bloc disjoncteur 14 par serrage des vis de bornes 32. Le montage final de l'ensemble cache ou capot d'obturation 92 et fil de plombage sur les bornes 32 et l'évidement 44 du bloc disjoncteur 14 interdit tout démontage du cavalier 80 ou déconnexion électrique du bloc déclencheur différentiel 12. le disjoncteur différentiel 10 est alors inviolable, et peut être mis en service en raccordant les conducteurs actifs 94,96.

L'emplacement ou le dimensionnement des picots 48 de centrage et de détrompage est fonction du calibre du bloc déclencheur différentiel 12. Une telle sécurité évite toute adaptation non compatible au niveau des calibres des deux blocs 12,14.

Le cache d'obturation 92 est équipé d'un verrou 140 (figure 2) déplaçable dans le sens de la flèche F3 de manière à s'engager dans un orifice 142 du boîtier 16. le verrou 140 comporte une languette ayant un trou 144 pour l'introduction du fil de plombage. Dans le cas d'un assemblage usine, le verrou 140 peut être verrouillé sans possibilité de démontage.

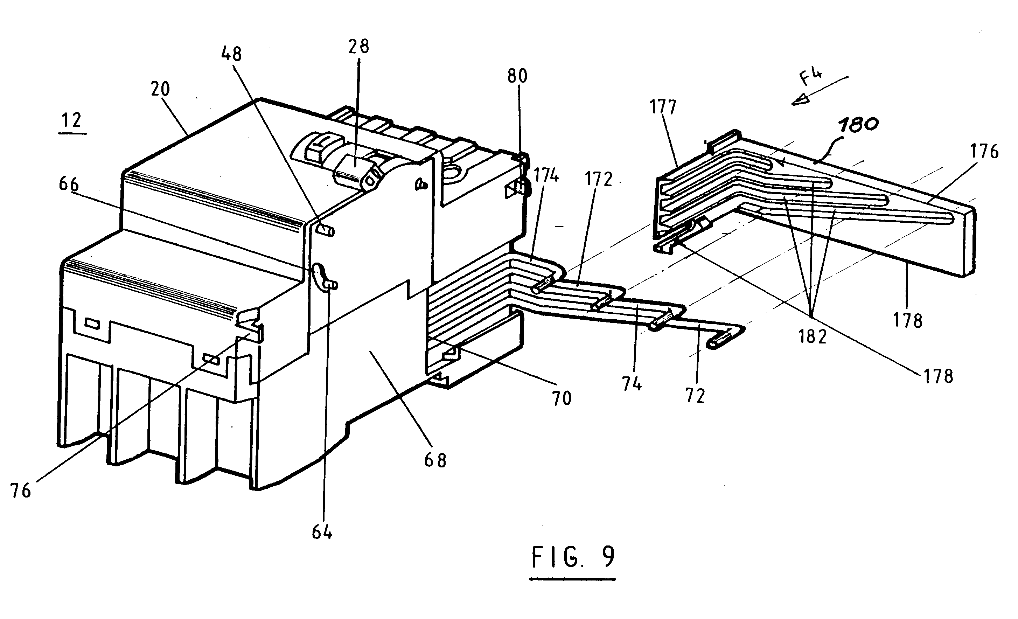

Selon la figure 9, le bloc déclencheur différentiel 12 tétrapolaire comporte quatre conducteurs 72,74,172,174 rigides pour la liaison électrique avec le bloc disjoncteur associé (non représenté). Les conducteurs 72,74,172,174 sont protégés par un isolateur 176 en matériau plastique ayant une configuration en L. La branche 177 la plus courte de l'isolateur 176 est munie d'une languette 178 d'accrochage destinée à s'encliqueter sur le socle du bloc déclencheur 12 au droit de l'ouverture 70. L'autre branche 180 vient s'appliquer sur les faces latérales étroites 36 du bloc disjoncteur pour interdire l'accès aux deuxièmes bornes 32. Le capot 92 d'obturation est ensuite rapporté par dessus la branche 180 de l'isolateur 176 pour assurer le verrouillage de la liaison mécanique entre les deux blocs. La face interne de l'isolateur 176 est équipée de rainures 182 pour le logement des conducteurs 72,74,172,174 rigides.

La présence de l'isolateur 176 assure :
- une protection mécanique des conducteurs 72,74,172,174 contre toute déformation, lors des manipulations du bloc déclencheur différentiel 12 ou lors de son transport;
- une remise en place des conducteurs 72,74,172,174 aux entraxes prédéterminés autorisant une parfaite introduction dans les bornes 32 du bloc disjoncteur;
- un cloisonnement diélectrique entre les différents conducteurs 72,74,172,174, évitant tout amorçage dans les zones de cambrage prop ices à une détérioration de l'émail isolant;

La mise en place de l'isolateur 176 interdit d'autre part tout repiquage additionnel sur les bornes 32 du bloc disjoncteur, si le capot 92 d'obturation n'est pas monté.

L'isolateur 176 constitue un support de broches élastiques évitant tout reserrage des vis de bornes 32 après un certain temps d'utilisation.

## Revendications

1. Disjoncteur différentiel multipolaire formé par l'assemblage modulaire côte à côte d'un bloc déclencheur différentiel (12) à un bloc disjoncteur (14), lequel comporte une paire de première et deuxième bornes (30,32) de raccordement par pôle, disposées sur les faces latérales étroites opposées (34,36), et une première grande face latérale (38) d'accolement dotée d'une lumière (40) d'accès à une barre de déclenchement d'un premier mécanisme de commutation à manette (26), ledit bloc déclencheur (12) comprenant:
- un transformateur totalisateur (50) à enroulement secondaire (56) alimentant un relais de déclenchement (58),
- un deuxième mécanisme de commande (60) piloté par le relais (58) et une manette (28), et ayant un doigt (64) de déclenchement faisant saillie d'un orifice (66) ménagé dans une deuxième grande face latérale (68) conjuguée d'un boîtier moulé (20),
- des moyens de fixation pour assurer l'assemblage des deux blocs (12,14) après établissement automatique d'une première liaison mécanique (22) de déclenchement résultant de l'insertion du doigt (64) dans la lumière (40) au cours de la phase d'accolement des premières et deuxièmes grandes faces latérales (38,68),
- et des conducteurs de liaison (72,74,172,174) reliant le circuit primaire du transformateur (50) aux deuxièmes bornes (32) du bloc disjoncteur (14), caractérisé en ce que la deuxième grande face latérale (68) du bloc déclencheur différentiel (12), présente une ouverture (70) pour la traversée des conducteurs de liaison (72,74,172,174) vers l'interface entre les deux blocs (12,14), et que les moyens de fixation comportent un accrochage articulé (76,42), et un cavalier (80) de verrouillage, disposés respectivement du côté des premières et deuxièmes bornes (30,32) opposées, ledit cavalier (80) étant manoeuvrable vers une position active pour assurer le plaçage des conducteurs de liaison (72,74,172,174) contre la deuxième grande face latérale (68) lors du rapprochement progressif des deux blocs (12,14).

2. Disjoncteur différentiel selon la revendication 1, caractérisé en ce que la deuxième grande face latérale (68) du boîtier (20) est équipée de rainures (88,90) dans lesquelles s'encastrent les conducteurs de liaison (72,74) en position active du cavalier (80) de verrouillage.

3. Disjoncteur différentiel selon la revendication 1, caractérisé en ce que les conducteurs de liaison (72,74,172,174) sont logés dans des rainures (182) d'un isolateur (176), additionnel, ayant une première branche (177) encliquetable sur le boîtier (20) du bloc déclencheur (12) au droit de l'orifice (70), et une deuxième branche (178) venant en appui contre les faces latérales étroites (36) du bloc disjoncteur pour interdire l'accès aux deuxièmes bornes (32).

4. Disjoncteur différentiel selon l'une des revendication 1 à 3, caractérisé en ce que chaque conducteur de liaison (72,74,172,174) est conformé selon une demi-boucle en U dont l'extrémité libre (82,84) est engagée par l'extérieur dans la deuxième borne (32) correspondante du bloc disjoncteur (14).

5. Disjoncteur différentiel selon l'une des revendications 1 à 4, caractérisé en ce que ledit accrochage articulé comporte un ergot (76) solidaire du boîtier (20) et destiné à s'emboîter dans un évidement (42) conjugué du bloc disjoncteur (14), de manière à autoriser au début de la phase d'assemblage un pivotement relatif des deux blocs (12,14) autour d'un axe fictif vertical s'étendant dans la direction de la profondeur.

6. Disjoncteur différentiel selon l'une des revendications 1 à 5, caractérisé en ce que le cavalier (80) de verrouillage est monté à pivotement autour d'un axe (112) dans un logement (78) du boîtier (20) du bloc déclencheur (12), et comporte un bras de retenue (122) susceptible de s'engager dans un évidement (44) de fixation du bloc disjoncteur (14), ledit bras ayant une rampe (124) agencée pour assurer un effet de came sur un redan (126) de l'évidement (44) lorsque le cavalier (80) est manoeuvré de la position inactive vers la position active.

7. Disjoncteur différentiel selon la revendication 6, caractérisé en ce que le cavalier (80) de verrouillage est équipé d'un levier de commande (120) disposé à l'opposé de l'axe (112) d'articulation, et sensiblement en équerre par rapport au bras de retenue (122), lequel est pourvu d'un bossage (130) agencé à l'opposé de la rampe (124) pour former un point dur avec le boîtier (18) du bloc disjoncteur (14) lorsque le cavalier (80) de verrouillage se trouve en position active.

8. Disjoncteur différentiel selon l'une des revendications 6 et 7, caractérisé en ce que la base du cavalier (80) comporte deux branches élastiques séparées l'une de l'autre par une fente (113), autorisant l'encliquetage de l'axe (112) d'articulation dans ledit logement (78).

9. Disjoncteur différentiel selon l'une des revendications 1 à 8, caractérisé en ce que la deuxième grande face latérale (68) du bloc déclencheur (12) comporte des picots (48) de centrage et de détrompage, destinés à s'engager dans des orifices (46) conjugués, ménagés dans la première grande face (38) latérale d'accolement, et qu'une portion de ladite deuxième face (68) sert de flasque de montage du deuxième mécanisme de commande (60).

10. Disjoncteur différentiel selon l'une des revendications 6 à 9, caractérisé en ce que un capot (92) d'obturation est rapporté sur les deuxièmes bornes (32) et le cavalier (80) après raccordement du bloc déclencheur (12), pour rendre l'appareil inviolable en position assemblée des deux blocs (12,14), le capot (92) étant équipé d'un verrou (140) ayant un trou (144) pour l'introduction d'un fil de plombage.

## Patentansprüche

1. Mehrpoliger Leistungsschalter mit Fehlerstromschutz, der durch modularen seitlichen Anbau eines Fehlerstrom-Auslöseblocks (12) an einen Leistungsschalterblock (14) gebildet ist, der pro Pol ein auf den sich gegenüberliegenden schmalen Seitenflächen (34, 36) angeordnetes Paar erster und zweiter Anschlußklemmen (30, 32) und eine erste breite Anbauseitenfläche (38) mit einer Kulisse (40) für den Zugang zu einer Auslösewelle eines ersten Schaltmechanismus' mit Schaltknebel (26) aufweist, wobei der genannte Auslöseblock (12)
- einen Summenstromwandler (50) mit einer das Auslöserelais (58) speisenden Sekundärwicklung (56),
- einen über das Relais (58) sowie einen Schaltknebel (28) betätigten zweiten Schaltmechanismus (60) mit einem Auslösestift (64), der eine in der zugeordneten zweiten breiten Seitenfläche (68) eines Isolierstoffgehäuses (20) ausgebildete Öffnung (66) durchragt,
- Befestigungsmittel zur sicheren Verbindung der beiden Blöcke (12, 14) nach automatischer Herstellung einer ersten mechanischen Auslöseverbindung (22), die während der Ankopplung der ersten und zweiten breiten Seitenfläche (38, 68) durch Einführung des Auslösestifts (64) in die Kulisse (40) entsteht, sowie
- Verbindungsleitungen (72, 74, 172, 174) umfaßt, die den Primärkreis des Wandlers (50) mit den zweiten Klemmen (32) des Leistungsschalterblocks (14) verbinden, dadurch gekennzeichnet, daß die zweite breite Seitenfläche (68) des Fehlerstrom-Auslöseblocks (12) eine Öffnung (70) zur Durchführung der Verbindungsleitungen (72, 74, 172, 174) in die zwischen den beiden Blöcken (12, 14) liegende Ebene aufweist und daß die Befestigungsmittel eine gelenkige Rastverbindung (76, 42) sowie einen Riegel (80) umfassen, die jeweils auf der Seite der sich gegenüberliegenden ersten bzw. zweiten Anschlußklemmen (30, 32) angebracht sind, wobei der genannte Riegel (80) in eine aktive Stellung verbracht werden kann, um die Verbindungsleitungen (72, 74, 172, 174) bei der allmählichen Zusammenführung der beiden Blöcke (12, 14) gegen die zweite breite Seitenfläche (68) zu führen.

2. Leistungsschalter mit Fehlerstromschutz nach Anspruch 1, dadurch gekennzeichnet, daß die zweite breite Seitenfläche (68) des Gehäuses (20) Nuten (88, 90) aufweist, in die die Verbindungsleitungen (72, 74) in der aktiven Stellung des Riegels (80) eingepaßt sind.

3. Leistungsschalter mit Fehlerstromschutz nach Anspruch 1, dadurch gekennzeichnet, daß die Verbindungsleitungen (72, 74, 172, 174) in Nuten (182) eines zusätzlichen Isolierelements (176) geführt sind, das einen ersten Schenkel (177), der im rechten Winkel zur Durchführungsöffnung (70) auf das Gehäuse (20) des Fehlerstrom-Auslöseblocks (12) aufgeschnappt werden kann, sowie einen zweiten Schenkel (180) umfaßt, der auf die schmalen Seitenflächen (36) des Leistungsschalterblocks geführt wird, um den Zugang zu den zweiten Klemmen (32) zu verhindern.

4. Leistungsschalter mit Fehlerstromschutz nach einem der Ansprüche 1 bis 3, dadurch gekennzeichnet, daß sämtliche Verbindungsleitungen (72, 74, 172, 174) zu U-förmigen Halbschleifen geformt sind, deren freie Enden (82, 84) von außen in die zugehörigen zweiten Anschlußklemmen (32) des Leistungsschalterblocks (14) eingeführt werden.

5. Leistungsschalter mit Fehlerstromschutz nach einem der Ansprüche 1 bis 4, dadurch gekennzeichnet, daß die genannte gelenkige Rastverbindung einen fest mit dem Gehäuse (20) verbundenen Rasthaken (76) aufweist, der dazu dient, in eine zugeordnete Ausnehmung (42) am Leistungsschalterblock (14) einzugreifen, so daß die beiden Blöcke (12, 14) zu Beginn des Zusammenbaus um eine senkrechte, in der Tiefenebene verlaufende fiktive Achse relativ zueinander verschwenkt werden können.

6. Leistungsschalter mit Fehlerstromschutz nach einem der Ansprüche 1 bis 5, dadurch gekennzeichnet, daß der Riegel (80) in einer im Gehäuse (20) des Fehlerstrom-Auslöseblocks (12) ausgebildeten Aufnahme (78) um eine Achse schwenkbar gelagert ist und einen Sicherungsarm (122) umfaßt, der dazu dient, in eine Befestigungs-Ausnehmung (44) des Leistungsschalterblocks (14) einzugreifen, und eine Fase (124) aufweist, die so geformt ist, daß eine Leitkurvenwirkung auf eine Ansatzfläche (126) der Ausnehmung (44) entsteht, wenn der Riegel (80) von der inaktiven Stellung in die aktive Stellung verschwenkt wird.

7. Leistungsschalter mit Fehlerstromschutz nach Anspruch 6, dadurch gekennzeichnet, daß der Riegel (80) einen Betätigungshebel (120) aufweist, der gegenüber der Schwenkachse (112) angeformt ist und annähernd rechtwinklig zum Sicherungsarm (122) verläuft, an dem gegenüber der Fase (124) eine Wulst (130) ausgebildet ist, um in der aktiven Stellung des Riegels (80) einen harten Abstützpunkt mit dem Gehäuse (18) des Leistungsschalterblocks (14) zu bilden.

8. Leistungsschalter mit Fehlerstromschutz nach einem der Ansprüche 6 und 7, dadurch gekennzeichnet, daß der Fuß des Riegels (80) zwei elastische Schenkel aufweist, die durch einen Mittelspalt (113) voneinander getrennt sind und das Einschnappen der Schwenkachse (112) in der genannten Aufnahme (78) ermöglichen.

9. Leistungsschalter mit Fehlerstromschutz nach einem der Ansprüche 1 bis 8, dadurch gekennzeichnet, daß die zweite breite Seitenfläche (68) des Fehlerstrom-Auslöseblocks (12) Verwechslungsschutz- bzw. Zentrierstifte (48) aufweist, die dazu dienen, in die in der ersten breiten Anbauseitenfläche (38) ausgebildeten zugeordneten Öffnungen (46) einzugreifen, und daß ein Teil der genannten zweiten Seitenfläche (68) als Montageplatte für den zweiten Schaltmechanismus (60) dient.

10. Leistungsschalter mit Fehlerstromschutz nach einem der Ansprüche 6 bis 9, dadurch gekennzeichnet, daß nach dem Anschluß des Auslöseblocks (12) die zweiten Anschlußklemmen (32) und der Riegel (80) mit einer Schutzkappe (92) abgedeckt werden, um das Gerät in der verbundenen Lage der Blöcke (12, 14) unzugänglich zu machen, wobei die Schutzkappe (92) ein Sicherungselement (140) mit einer Bohrung (144) zur Durchführung eines Plombierdrahts aufweist.

## Claims

1. A multipole differential circuit breaker formed by modular side-by-side assembly of a differential trip unit (12) to a circuit breaker unit (14), which comprises a pair of first and second connection terminals (30, 32) per pole, disposed on the opposite narrow side faces (34, 36), and a first large side face (38) for adjoinment provided with an aperture (40) for access to a trip bar of a first switching mechanism with handle (26), said trip unit (12) comprising :
- a summing transformer (50) with secondary winding (56) supplying a trip relay (58),
- a second operating mechanism (60) controlled by the relay (58) and a handle (28), and having a tripping finger (64) protruding out from an orifice (66) arranged in a conjugate second large side face (68) of a moulded case (20),
- fixing means to perform assembly of the two units (12, 14) after automatic establishment of a first mechanical tripping link (22) resulting from insertion of the finger (64) in the aperture (40) in the course of the adjoinment phase of the first and second large side faces (38, 68),
- and connecting conductors (72, 74, 172, 174) connecting the primary circuit of the transformer (50) to the second terminals (32) of the circuit breaker unit (14), characterized in that the second large side face (68) of the differential trip unit (12) presents an opening (70) for the connecting conductors (72, 74, 172, 174) to pass through to the interface between the two units (12, 14), and that the fixing means comprise an articulated latching (76, 42), and a locking strap (80), located respectively on the side of the opposite first and second terminals (30, 32), said strap (80) being able to be operated to an active position to perform placing of the connecting conductors (72, 74, 172, 174) against the second large side face (68) when the two units (12, 14) are progressively.moved towards one another.

2. The differential circuit breaker according to claim 1, characterized in that the second large side face (68) of the case (20) is equipped with grooves (88, 90) in which the connecting conductors (72, 74) fit in the active position of the locking strap (80).

3. The differential circuit breaker according to claim 1, characterized in that the connecting conductors (72, 74, 172, 174) are housed in grooves (182) of an additional insulator (176), having a first branch (177) able to clip onto the case (20) of the trip unit (12) facing the orifice (70), and a second branch (178) pressing against the narrow side faces (36) of the circuit breaker unit to prevent access to the second terminals (32).

4. The differential circuit breaker according to one of the claims 1 to 3, characterized in that each connecting conductor (72, 74, 172, 174) is shaped as a U-shaped half-loop whose free end (82, 84) is engaged from the outside in the corresponding second terminal (32) of the circuit breaker unit (14).

5. The differential circuit breaker according to one of the claims 1 to 4, characterized in that said articulated latching comprises a pin (76) securedly united to the case (20) and designed to fit in a conjugate recess (42) of the circuit breaker unit (14), in such a way as to enable at the beginning of the assembly phase relative pivoting of the two units (12, 14) around a fictitious vertical axis extending in the depthwise direction.

6. The differential circuit breaker according to one of the claims 1 to 5, characterized in that the locking strap (80) is pivotally mounted around a spindle (112) in a housing (78) of the case (20) of the trip unit (12), and comprises a securing arm (122) able to engage in a fixing recess (44) of the circuit breaker unit (14), said arm having a ramp (124) arranged to perform a cam effect on a cheek (126) of the recess (44) when the strap (80) is moved from the inactive position to the active position.

7. The differential circuit breaker according to claim 6, characterized in that the locking strap (80) is equipped with an operating lever (120) located opposite the articulation spindle (112), and appreciably perpendicularly with respect to the securing arm (122), which is provided with a boss (130) arranged opposite the ramp (124) to form a hangup point with the case (18) of the circuit breaker unit (14) when the locking strap (80) is in the active position.

8. The differential circuit breaker according to either one of the claims 6 or 7, characterized in that the base of the strap (80) comprises two flexible branches separated from one another by a slot (113), enabling the articulation spindle (112) to be clipped into said housing (78).

9. The differential circuit breaker according to one of the claims 1 to 8, characterized in that the second large side face (68) of the trip unit (12) comprises centering and error prevention pins (48), designed to engage in conjugate orifices (46), arranged in the first large side adjoinment face (38), and that a portion of said second face (68) acts as the mounting flange for the second operating mechanism (60).

10. The differential circuit breaker according to one of the claims 6 to 9, characterized in that a sealing cover (92) is fitted on the second terminals (32) and strap (80) after the trip unit (12) has been connected, to make the apparatus tamperproof in the assembled position of the two units (12, 14), the cover (92) being equipped with a bolt (140) having a hole (144) for insertion of a sealing wire.
